# EUROPEAN PATENT APPLICATION

(11) **EP 1 720 006 A1**
(43) Date of publication of application: **08.11.2006**
(21) Application number: 05076024.8
(22) Date of filing: 02.05.2005
(51) Int. Cl.: G01N 23/20, G01N 23/207

(54) **Method and apparatus for x-ray diffraction analysis**

(71) Applicant: F. HOFFMANN-LA ROCHE AG, 4070 Basel (CH)
(72) Inventor: Grassman, Olaf, 79400 Kandern (DE); Hennig, Michael, 79576 Weil am Rhein (DE); Hochstrasser, Remo, 4104 Oberwil (CH); Schwitter, Urs, 4153 Reinach (CH)
(74) Representative: Ventocilla, Abraham

(57) **Abstract**

A method for transmission mode X-ray diffraction analysis of a sample by means of an apparatus comprising a X-ray radiation source (21) that provides X-ray radiation for irradiating the sample and a detector (22) for detecting X-ray radiation transmitted through and diffracted by the sample.

The method comprises: (a) placing a sample to be analyzed on a substrate (14), (b) generating a strip-shaped X-ray beam (24) the central part of which extends along a plane, (c) positioning the substrate (14) and thereby the sample in an initial position in which said sample lies in the path of beam (24) and a slice (27) of the sample is irradiated by beam (24), (d) effecting the following movements of the substrate (19) with respect to the above mentioned initial position thereof:
(d.1) a rotation of the substrate (19) and thereby of the sample around a rotation axis (29) which is perpendicular to the substrate, the rotation covering a predetermined rotation angle, and (d.2) a tilting of the substrate (19) and thereby of the sample around a tilting axis (28) and over a tilting angle (T) defined as the angle that the rotation axis (29) forms with the plane through which the central part of the beam (24) extends, the tilting axis lying in the plane through which the central part of the beam (24) extends and being perpendicular to the rotation axis (29), the tilting covering a tilting angle (T) comprised between a first and a second predetermined value, and (e) detecting with the detector (22) X-ray radiation transmitted through and diffracted by the sample during a time interval over which the above mentioned movements of the substrate (19) are effected.

## Description

### FIELD OF THE INVENTION

The invention concerns a method for transmission mode X-ray diffraction analysis of a sample by means of an apparatus comprising an X-ray radiation source that provides X-ray radiation for irradiating said sample and a detector for detecting X-ray radiation transmitted through and diffracted by said sample.

The invention also concerns an apparatus for transmission mode X-ray diffraction analysis of a sample, said apparatus including an X-ray radiation source that provides X-ray radiation for irradiating said sample and a detector for detecting X-ray radiation transmitted through and diffracted by said sample.

The invention further concerns a method for transmission mode X-ray diffraction analysis of a plurality of samples by means of an apparatus comprising an X-ray radiation source and a detector for detecting X-ray radiation transmitted through and diffracted by said sample.

The invention further concerns an apparatus for transmission mode X-ray diffraction analysis of a plurality of samples by means of an apparatus comprising an X-ray radiation source and a detector for detecting X-ray radiation transmitted through and diffracted by a sample.

### BACKGROUND OF THE INVENTION

Combinatorial chemistry refers to techniques to fabricate, test, and store the resulting data for a material library containing tens, hundreds or even thousands different materials or compounds. Combinatorial investigations require rapid screening techniques to test and evaluate variations of composition, structure and property within a material library. X-ray diffraction analysis is one of the most suitable screening techniques because abundant information can be revealed from the diffraction pattern and X-ray diffraction analysis is fast and non-destructive.

Diffraction pattern analysis plays an important role in such diverse applications as solving molecular structures, identifying compounds, and the fabrication of materials. If a compound can be made to crystallize into sizeable crystals, diffraction patterns from single crystals can provide a good deal of information about the atomic structure of the compound. Many compounds, however, can only be obtained as powders. Although a powder diffraction pattern yields much less information than that generated by a single crystal, it is unique to each substance, and is therefore highly useful for purposes of identification.

Scattering of incident X-ray radiation from a sample of material can yield information about the atomic structure of the material. When such a beam of radiation strikes a sample, a pattern of diffracted radiation is created, which has a spatial intensity distribution that depends on the wavelength of the incident radiation and the atomic structure of the material and that can be recorded on a suitable detector such as a point detector, a 1D detector or a 2D detector. Diffraction analysis is the method of choice for studying crystalline materials, crystallization behavior and liquid, gel or solid phase, or phase transitions of materials.

In certain circumstances, it is desirable to perform a sample analysis using transmission mode X-ray diffraction analysis due to various reasons, including the need for low angle diffraction, and advantages when testing thin samples or samples in liquid environments.

A problem that is encountered with known powder diffraction analysis equipment using a 2D detector is that during detection of the diffraction radiation, single diffraction spots and arcs are often observed instead of rings, especially when organic crystalline material (such as pharmaceuticals) is irradiated. This may be the result of the fact that not all lattice planes of the crystalline powder material have or not been exposed to X-ray radiation for the same time or same amount, because the crystals were not random oriented or only a few crystals were present. As a result, the peak intensities of the powder diffraction patterns are not correct, and no representative 1D-powder diffraction pattern (intensity vs. diffraction angle 2.theta.) is created. This causes problems during comparison of diffraction patterns for identification.

### SUMMARY OF THE INVENTION

A first aim of the invention is to provide a method and an apparatus of the above mentioned kind which make possible to perform X-ray transmission diffraction analysis with significantly improved particle statistics. Particle statistics is a term known in the art. With achieving "improved particle statistics" is meant obtaining a powder diffraction pattern with more reliable diffracted beam intensities, or diffracted beam intensities with reduced standard deviation.

A second and additional aim of the inventions is to provide a method and an apparatus of the above mentioned kind which make possible to perform X-ray transmission diffraction analysis of a plurality of samples in a time effective way.

According to a first aspect of the invention the above mentioned first aim is achieved by means of a method defined by claim 1. Claims 2 to 9 define preferred embodiments of this method.

According to a second aspect of the invention the above mentioned first aim is achieved by means of an apparatus defined by claim 10. Claims 11 to 21 define preferred embodiments of this apparatus.

The main advantage obtained with the method and apparatus according to the first and second aspect of the invention is that they make possible to perform X-ray transmission diffraction analysis of a sample with significantly improved particle statistics.

According to a third aspect of the invention the above mentioned second aim is achieved by means of a method defined by claim 22. Claims 23 to 30 define preferred embodiments of this method.

According to a fourth aspect of the invention the above mentioned second aim is achieved by means of an apparatus defined by claim 31. Claims 32 to 42 define preferred embodiments of this apparatus.

The main advantage obtained with the method and apparatus according to the third and fourth aspect of the invention is that they make possible to perform X-ray transmission diffraction analysis of a plurality of samples with significantly improved particle statistics and in a time effective way.

### BRIEF DESCRIPTION OF THE DRAWINGS

The subject invention will now be described in terms of its preferred embodiments with reference to the accompanying drawings. These embodiments are set forth to aid the understanding of the invention, but are not to be construed as limiting.
- Fig. 1: shows a schematic perspective view of a sample container 11 of multiple-sample holder 12 shown by Fig. 10 and of a strip-shaped X-ray beam 24 which irradiates a sample placed on a substrate 19.
- Fig. 2: shows a schematic cross-sectional view of a sample container 11 taken along a plane which passes through symmetry axis 15 (shown in Fig. 1) of sample container 11 and which is the plane in which X-ray beam 24 extends.
- Fig. 3: shows a schematic top view of sample container 11.
- Fig. 4: shows a schematic cross-sectional view of a sample container 11 taken along a plane which passes through symmetry axis 15 and which is perpendicular to the plane in which X-ray beam 24 extends. In this view sample container 11 is at an initial position with a tilting angle equal to zero.
- Fig. 5: shows a schematic cross-sectional view of sample container 11 shown in Figures 1 to 4, but in this view sample container 11 is in a tilted position with a tilting angle T between the symmetry axis 15 of sample container 11 and the plane in which X-ray beam 24 extends.
- Fig. 6: shows schematically the structure of a first embodiment of an apparatus for carrying out a method according to the invention.
- Fig. 7: shows schematically the structure of a second embodiment of an apparatus for carrying out a method according to the invention.
- Fig. 8: shows schematically the structure of a third embodiment of an apparatus for carrying out a method according to the invention
- Fig. 9: shows schematically the structure of a fourth embodiment of an apparatus for carrying out a method according to the invention
- Fig. 10: shows a schematic perspective view of an apparatus according to the invention for performing transmission mode X-ray diffraction analysis of a plurality of samples.
- Figure 11: shows an X-ray diffraction pattern which serves as reference for evaluating the quality of diffraction patterns obtained with different methods.
- Fig. 12: shows an X-ray diffraction pattern obtained with a stationary sample.
- Fig. 13: shows an X-ray diffraction pattern obtained with a sample that is rotated 360 degrees during the detection of the radiation diffracted by a sample.
- Fig. 14: shows an X-ray diffraction pattern obtained with a sample that is tilted over a certain tilting angle and rotated 360 degrees during the detection of the radiation diffracted by a sample.
- Fig.15: shows for the purpose of comparison 3 X-ray diffraction patterns obtained under the following conditions: the lower diffraction pattern is obtained with a stationary sample, the diffraction pattern in the center is obtained when the sample is rotated only during the measurement, the upper diffraction pattern is obtained with a sample that is rotated and tilted during the measurement.

### REFERENCE NUMERALS IN DRAWINGS

- 11: sample container / single well / a well of a multiple-well tray
- 12: multiple-sample holder / multiple-well tray
- 13: sample volume / sample layer
- 14: inner surface of the bottom wall 19 of sample container 11
- 15: symmetry axis of sample container 11
- 16: center of upper opening of sample container 11
- 17: center of plane substrate or substrate element 19 /center of the bottom wall 19
- 18: side wall of sample container 11
- 19: sample holding substrate / sample holding substrate element / bottom wall of sample container 11
- 20: primary X-ray beam
- 21: X-ray source
- 22: detector
- 23: monochromator for focusing X-ray beam onto a focal line segment
- 24: strip shaped X-ray beam directed onto sample
- 25:
- 26: diffracted X-ray beam
- 27: slice of the sample / slice of volume 13 irradiated by beam 24
- 28: tilting axis
- 29: rotation axis
- 30: detector circle
- 31: table for rotating and tilting multiple-sample holder 12

- 41: X-ray tube
- 42: shutter
- 43: Soller slit
- 44: curved monochromator
- 45: slit
- 46: slit
- 47: sample holding substrate
- 48: diffracted beam
- 49: Beryllium window
- 50:
- 51: anode wire
- 52: delay line
- 53: position sensitive detector

### DETAILED DESCRIPTION OF PREFERRED EMBODIMENTS

In the following description the term "sample" is used to designate a sample comprising one or more crystals as well as a powder sample. A "powder sample" is defined herein as a powder sample of a compound of which the diffraction or crystallization behavior is to be determined. Such a compound may be a chemical substance, or a mixture of different substances. A compound of the invention may comprise an organic or organo-metallic molecular compound, such as a pharmaceutically active molecule or catalyst-ligand complex or a dimer, salt, ester, solvate or functional part thereof. A powder sample of the present invention may also comprise a biomolecule, for instance a nucleic acid (such as DNA, RNA and PNA), a polypeptide, peptides, glycoprotein and other proteinaceous substances, a lipoprotein, protein-nucleic acid complex, carbohydrate, biomimetic or a functional part, derivative and/or analogue thereof.

It is to be noted that the powder sample may indeed be in the form of a powder. The person skilled in the art of diffraction analysis understands, however, that a "powder sample" also includes a number of crystals which are contained in a solid material, such as is the case for metals, polymers, etc. Thus, in the latter case, the powder sample appears as a solid material in one piece.

### EXEMPLE 1: FIRST EMBODIMENT OF A METHOD ACCORDING TO THE INVENTION

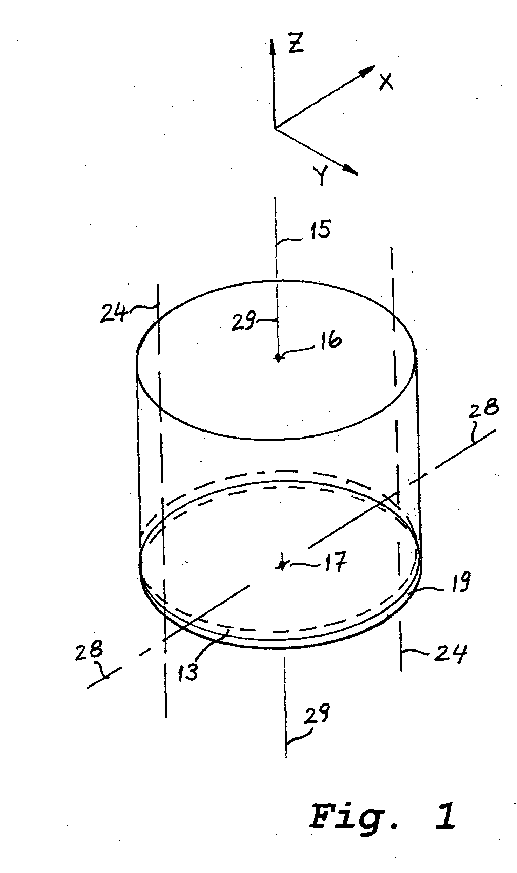

A first embodiment of a method according to the invention for transmission mode X-ray diffraction analysis of a single sample is described hereinafter with reference to Figures 1 to 5.

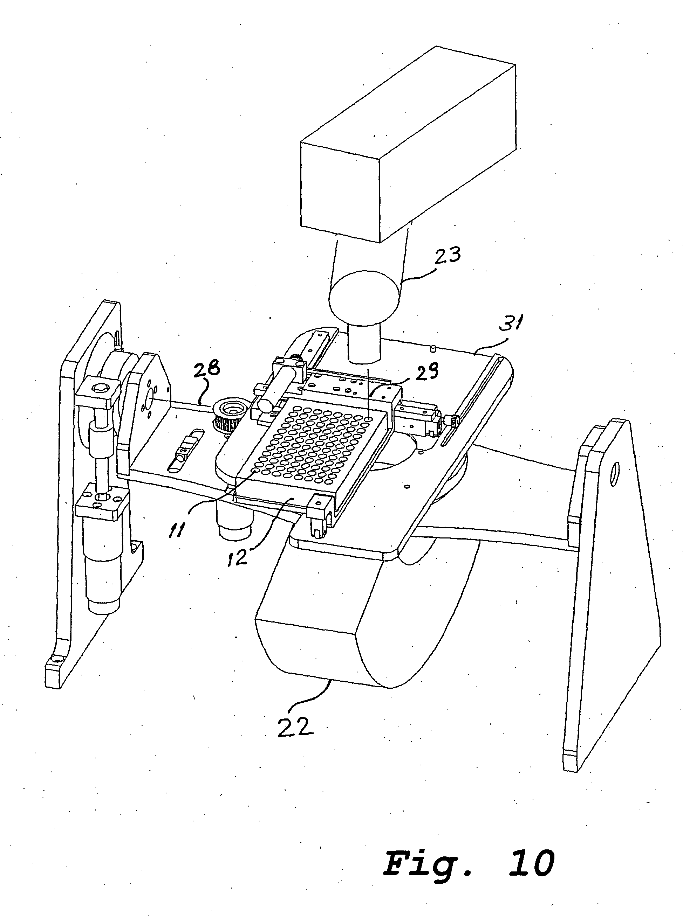

Fig. 1 shows a schematic perspective view of a sample container 11, which is e.g. a single well or one of the wells of a multiple-well tray 12 shown by Fig. 10, and of a strip-shaped X-ray beam 24 which irradiates a sample placed on a substrate 19 which is e.g. the bottom wall of sample container 11. Coordinate axis X, Y, Z normal to each other are shown in Fig. 1 for reference.

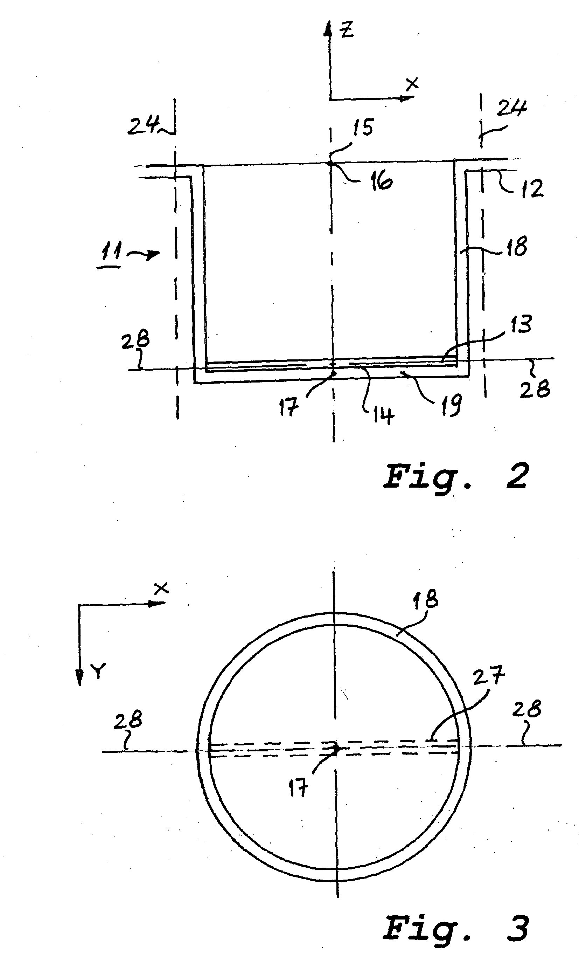

Fig. 2 shows a schematic cross-sectional view of sample container 11 of Fig. 1 taken along a plane parallel to the X-Z-plane and which passes through symmetry axis 15 (shown in Fig. 1) of sample container 11, and which is the plane in which X-ray beam 24 extends.

Fig. 3 shows a schematic top view of sample container 11 in Fig. 1.

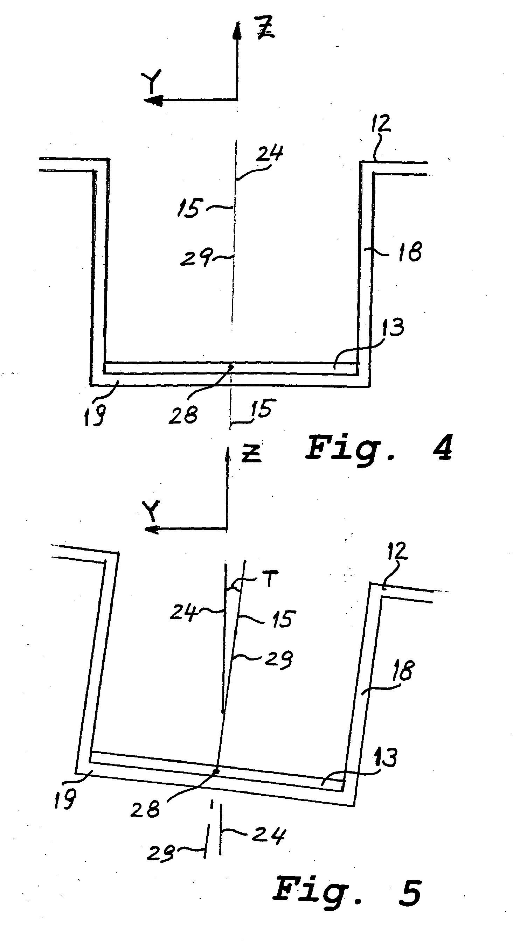

Fig. 4 shows a schematic cross-sectional view of sample container 11 of Fig. 1 taken along a plane parallel to the Y-Z-plane and which passes through symmetry axis 15 and which is perpendicular to the plane in which X-ray beam 24 extends. In this view sample container 11 is at an initial position with a tilting angle equal to zero.

Fig. 5 shows a schematic cross-sectional view of sample container 11 similar to the view shown in Figure 4, but in this view sample container 11 is in a tilted position with a tilting angle T between the symmetry axis 15 of sample container 11 and the plane in which X-ray beam 24 extends.

The first embodiment of a method according to the invention comprises the following steps:
(A1) a sample to be analyzed is placed on plane substrate 19 which is adapted for receiving and holding a sample and which is transparent to X-ray radiation,
(B1) a strip-shaped X-ray beam 24 is generated by means of an X-ray radiation source 21 (not shown in Figures 1 to 5). As shown by Figures 1, 2, 4 and 5, the central part of beam 24 extends along a plane,
(C1) a substrate 19 and thereby the sample placed thereon are positioned by suitable electro-mechanical means in the initial position shown by Fig. 4 in which that sample lies in the path of X-ray beam 24. When substrate 19 is in that initial position a slice 27 (shown by Fig. 3) of a volume element 13, which contains the sample, and thereby a slice of the sample itself is irradiated by beam 24,
(D1) the following movements of substrate 19 with respect to the above mentioned initial position thereof are effected:
   (D1.1) a rotation of substrate 19 and thereby of the sample around a rotation axis 29, and
   (D1.2) a tilting of substrate 19 and thereby of the sample around a tilting axis 28 and over a tilting angle T which varies between a first and a second predetermined value, and
(E1) X-ray radiation transmitted through and diffracted by said sample is detected during a time interval over which the above mentioned movements of the substrate 19 are effected.

Substrate 19 is for instance a wall or a foil made e.g. of an amorphous plastic material, e.g. Kapton® (Du Pont) or Mylar® (Du Pont).

Substrate 19 is preferably also optically transparent, i.e. transparent to visible radiation.

Substrate 19 is e.g. the plane bottom wall 19 of sample container, e.g. of a sample container 11, which has e.g. a cylindrical side wall 18 and which has an upper opening.

The sample to be analyzed is placed in a volume element 13 which as shown in Fig. 1 is e.g. a thin layer located at the bottom of sample container 11 and on substrate 19. Volume element 13 is designated hereinafter also as sample layer 13. The sample preferably occupies a substantial part of or the entire volume of volume element 13.

Substrate 19 has an inner surface 14. The sample to be analyzed is placed on this surface of substrate 19.

As shown by Fig. 1, sample container 11 has a symmetry axis 15 which is perpendicular to substrate 19 and which passes through the center 17 of substrate 19 and through the center 16 of the upper opening of sample container 11.

As shown by Figures 1, 4 and 5, in a preferred embodiment rotation axis 29 coincides with the symmetry axis 15 of sample container 11.

As shown by Fig. 5, the tilting angle T is the angle that rotation axis 29 forms with the plane through which the central part of beam 24 extends.

As shown by Figures 1 to 5, tilting axis 28 lies in the plane through which the central part of beam 24 extends and is perpendicular to rotation axis 29. As shown in particular by Figures 2, 4 and 5 tilting axis 28 passes preferably through the center of sample layer 13.

In a preferred embodiment the tilting of substrate 19 covers a tilting angle T comprised between a tilting angle zero defined by the initial position of substrate 19 and a predetermined value greater than zero, e.g. 10 degrees.

In a preferred embodiment the rotation and tilting movements of substrate 19 are performed simultaneously and continuously.

In another preferred embodiment the tilting movement of substrate 19 is performed stepwise and a rotation thereof covering a predetermined rotation angle is performed for each tilting step.

Substrate 19 is preferably a plane wall or foil.

In a preferred embodiment the rotation axis 29 coincides with the symmetry axis 15 of sample container 11.

In another preferred embodiment the central axis of beam 24 and rotation axis 29 pass through the center 17 of plane substrate 19 when the latter is in the above-mentioned initial position.

In a preferred embodiment the radiation source 21 and thereby beam 24 are stationary and substrate 19 is moved with respect to beam 24.

In a preferred embodiment the rotation of substrate 19 covers an angle which is equal or close to 360 degrees.

In another embodiment the rotation of substrate 19 covers an angle which is smaller than 360 degrees.

In another embodiment the rotation of substrate 19 covers an angle which is larger than 360 degrees.

### EXEMPLE 2: FIRST EMBODIMENT OF AN APPARATUS ACCORDING TO THE INVENTION

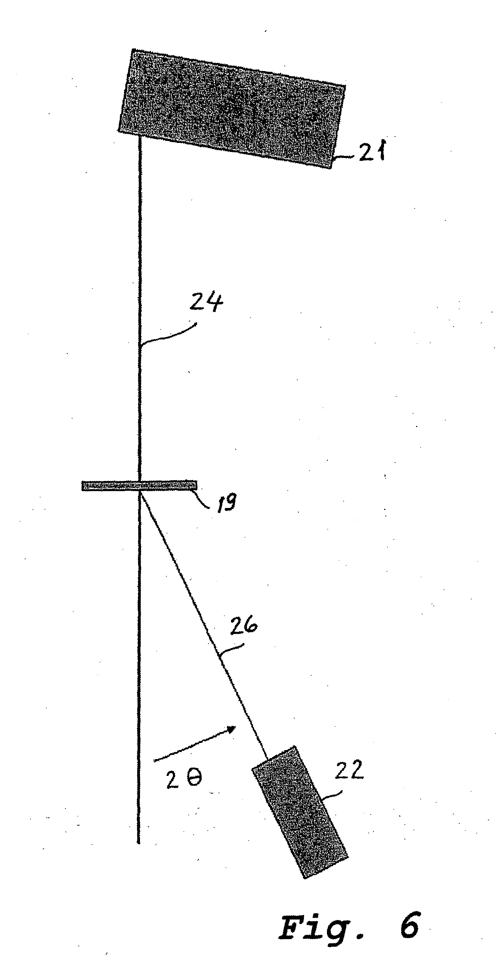

Fig. 6 shows schematically the structure of a first embodiment of an apparatus for carrying out the above described method. This apparatus comprises an X-ray radiation source 21 that provides X-ray beam 24 for irradiating a sample placed on a substrate 19 and a detector 22 for detecting X-ray radiation 26 transmitted through and diffracted by the sample. Fig. 6 shows the diffraction angle 2 Theta. Theta is the Bragg angle.

The apparatus represented in Fig. 6 is a diffractometer and comprises an X-ray radiation source 21 which is adapted to provide a strip-shaped X-ray beam 24 the central part of which extends along a plane as shown in Figures 1, 2, 4 and 5,

The apparatus schematically represented in Fig. 6 further comprises electro-mechanical means (not shown in Fig. 6) for
- positioning substrate 19 and thereby the sample on that element in an initial position in which that sample lies in the path of beam 24 and a slice 27 (shown by Fig. 3) of a volume element 13, which contains the sample, and thereby a slice of the sample itself is irradiated by beam 24,
- effecting the following movements of the substrate 19 with respect to the above mentioned initial position:
   a rotation of substrate 19 and thereby of the sample around a rotation axis 29 which is perpendicular to the substrate, the rotation covering a predetermined rotation angle, and
   a tilting of substrate 19 and thereby of the sample around a tilting axis 28 which lies in the plane through which the central part of beam 24 extends and which is perpendicular to rotation axis 29, the tilting covering a tilting angle T comprised between a tilting angle zero defined by the initial position of substrate 19 and a predetermined value greater than zero, e.g. 10 degrees.

The apparatus schematically represented in Fig. 6 further comprises a detector 22 for detecting X-ray radiation transmitted through and diffracted by the sample during a time interval over which the above mentioned movements of the substrate 19 are effected.

Substrate 19 is e.g. as described above with reference to Figures 1 to 5.

Substrate 19 is preferably a plane wall or foil.

Substrate 19 is e.g. the plane bottom wall 19 of sample container, e.g. of a sample container 11, which has e.g. a cylindrical side wall 18 and which has an upper opening.

In a preferred embodiment the width of sample container 11 is approximately equal to the width of X-ray beam 24.

When substrate 19 is in the above-mentioned initial position, the central axis of beam 24 and rotation axis 29 pass through the center 17 of substrate 19.

In a preferred embodiment detector 22 is a movable detector.

In another preferred embodiment detector 22 is a stationary detector which lies in a portion of a spherical surface.

In a preferred embodiment of the above-described apparatus, the means for moving sample substrate 19 are adapted for effecting a rotation of substrate 19 covering an angle which is equal or close to 360 degrees.

In another embodiment the rotation of substrate 19 covers an angle which is smaller than 360 degrees.

In another embodiment the rotation of substrate 19 covers an angle which is larger than 360 degrees.

### EXEMPLE 3: SECOND EMBODIMENT OF AN APPARATUS ACCORDING TO THE INVENTION

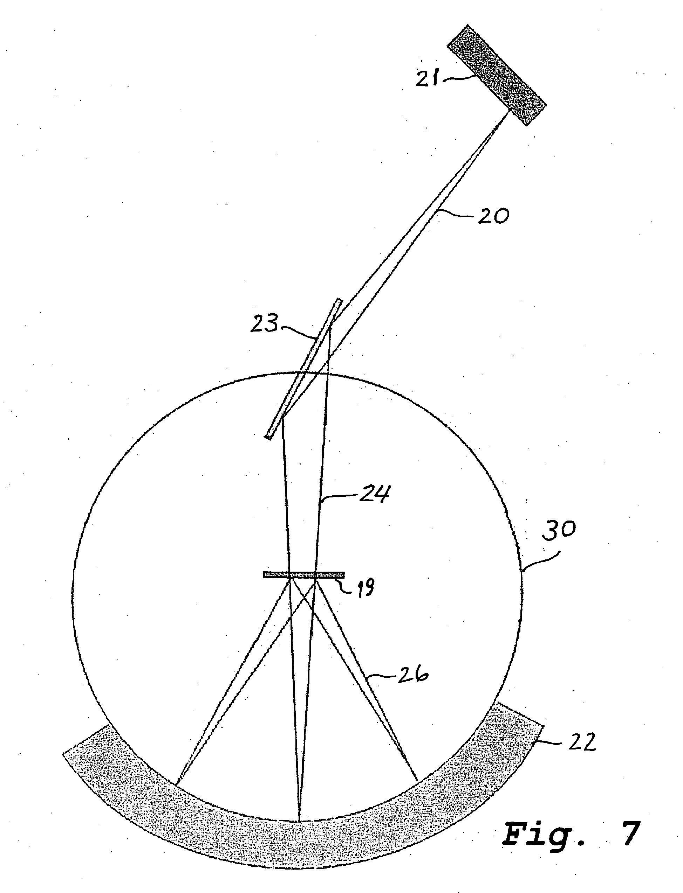

Fig. 7 shows schematically the structure of a second embodiment of an apparatus for carrying out the above described method. This apparatus is a diffractometer and comprises basically the components of the apparatus described above with reference to Fig. 6 and in addition comprises means for focusing X-ray beam 24, e.g. a Germanium (111) monochromator 23 located in the path of beam 24 and between X-ray source 21 and substrate 19 which holds the sample to be analyzed. In this embodiment detector 22 is a stationary detector which lies in a portion of a spherical surface.

### EXEMPLE 4: THIRD EMBODIMENT OF AN APPARATUS ACCORDING TO THE INVENTION

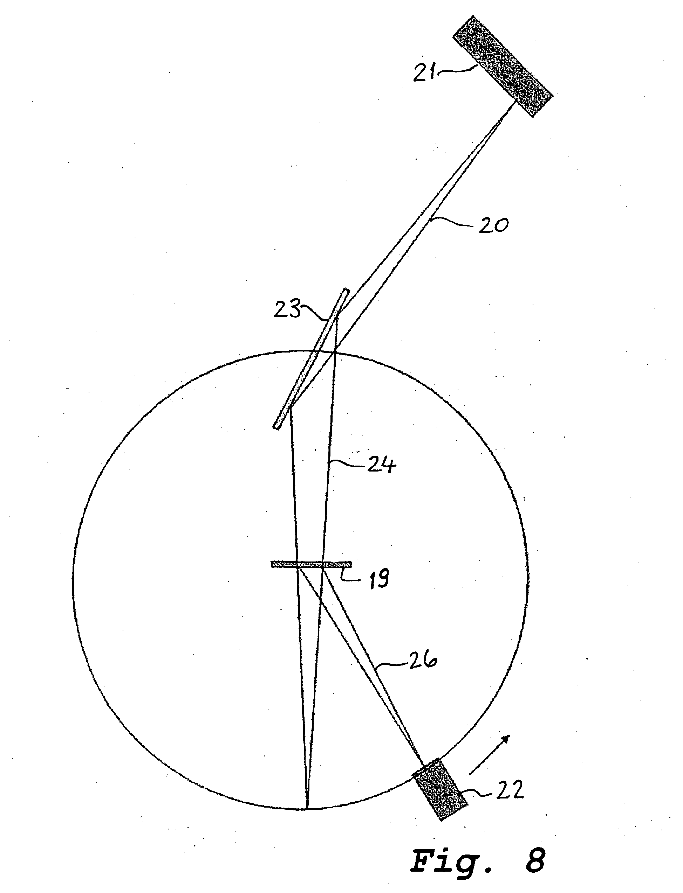

Fig. 8 shows schematically the structure of a third embodiment of an apparatus for carrying out the above described method. This apparatus comprises the components of the diffractometer described above with reference to Fig. 7 with exception of the detector. In the embodiment shown by Fig. 8, detector 22 is a movable detector.

### EXEMPLE 5: FOURTH EMBODIMENT OF AN APPARATUS ACCORDING TO THE INVENTION

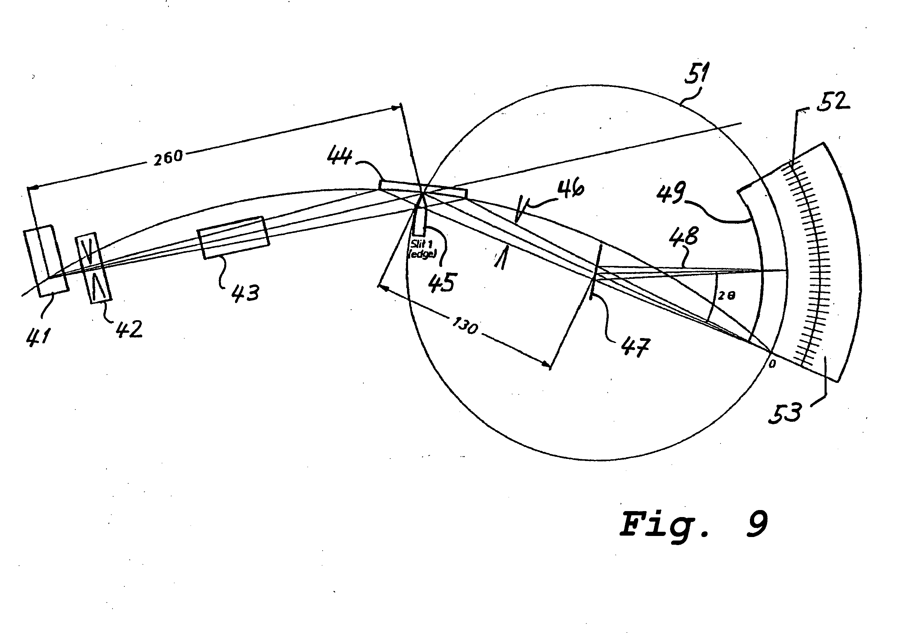

Fig. 9 shows schematically the structure of a fourth embodiment of an apparatus for carrying out the above described method. This apparatus has basically the structure of the apparatus described above with reference to Fig. 7.

A diffractometer according to this fourth embodiment comprises the following components arranged as shown in Fig. 9:
a X-ray tube 41,
a curved Germanium (111) monocromator 44 mounted on the circumference 51 of the diffractometer,
a position sensitive detector 53,
a shutter 42,
a Soller slit 43,
slits 45 and 46,
a sample holding substrate 47, and
a Beryllium window 49.

Monocromator 44 receives a primary X-ray beam 24 provided by X-ray tube 41 and supplies a convergent monochromatic Kα₁ X-ray beam which is focused in 2θ (2 Theta) at the point O. With the arrangement shown in Fig. 9 diffracted beams 48 diffracted by a sample placed on substrate 47 are focused on a circle of radius r = 130 millimeter within a range 2θ of about 40 degrees. This is advantageous for the use of a stationary curved position sensitive detector (PSD) 53. The anode wire of position sensitive detector 53 coincides with the focusing circle and the diffracted beams 48 enter always perpendicular to the counter surface in contrast to conventional Guinier or Seemann-Bohlin techniques.

The apparatus shown by Fig. 9 comprises electro-mechanical means for positioning and moving sample holding substrate 47. The latter means are as described above for the embodiment described with reference to Fig. 6.

### EXEMPLE 6: SECOND EMBODIMENT OF A METHOD ACCORDING TO THE INVENTION

A second embodiment of a method according to the invention for transmission mode X-ray diffraction analysis is described hereinafter with reference to Figures 1 to 5 and 10. This method serves for transmission mode X-ray diffraction analysis of a plurality of samples by means of an apparatus comprising an X-ray radiation source 21 and a detector 22 for detecting X-ray radiation transmitted through and diffracted by the sample.

Fig. 10 shows a schematic perspective view of an apparatus for performing this second embodiment of a method according to the invention.

The second embodiment of a method according to the invention comprises the following steps:
(A2) a plurality of samples to be analyzed are placed on respective plane substrate elements 19 of a multiple-sample holder 12. Each of substrate elements 19 is adapted for receiving and holding a sample and is transparent to X-ray radiation,
(B2) a strip-shaped X-ray beam 24 is generated by means of a X-ray radiation source 21 (shown in Fig. 10). As shown by Figures 1, 2, 4 and 5, the central part of beam 24 extends along a plane,
(C2) a multiple-sample holder 12 is placed in an apparatus comprising means for moving and positioning multiple-sample holder 12 so that a pre-selected substrate element 19 can be positioned in the path of beam 24. When the pre-selected substrate element 19 is in that initial position a slice 27 (shown by Fig. 3) of a volume element 13, which contains the sample, and thereby a slice of the sample itself is irradiated by beam 24,
(D2) a pre-selected substrate element 19 of said multiple-sample holder 12 is positioned in an initial position in which said sample lies in the path of said beam 24 and a slice 27 of said sample is irradiated by said beam 24,
(E2) the following movements of said pre-selected substrate element 19 with respect to the above mentioned initial position thereof are effected:
   (E2.1) a rotation of the pre-selected substrate element 19 and thereby of the sample around a rotation axis 29, and
   (E2.2) a tilting of the pre-selected substrate element 19 and thereby of the sample around a tilting axis 28 and over a tilting angle T which varies between a first and a second predetermined value, and
(F2) X-ray radiation transmitted through and diffracted by said sample is detected during a time interval over which the above mentioned movements of the pre-selected substrate 19 are effected.

The positioning of the pre-selected substrate element 19 described above under (D2) is effected by suitable translation and/or rotation movements of multiple-sample holder 12 which bring that substrate element to the above-mentioned initial position.

The movements described above under (E2.1) and (E2.2) are effected by corresponding movements of multiple-sample holder 12.

Substrate element 19 is for instance a wall or a foil made e.g. of an amorphous plastic material, e.g. Kapton® (Du Pont) or Mylar® (Du Pont).

Substrate element 19 is preferably also optically transparent, i.e. transparent to visible radiation.

As shown by Figures 2, 4 and 5 substrate element 19 is e.g. the plane bottom wall of sample container, e.g. of a sample container 11, which has e.g. a cylindrical side wall 18 and which has an upper opening.

The sample to be analyzed is placed in a volume element 13 which as shown in Fig. 1 is e.g. a thin layer located at the bottom of sample container 11 and on substrate element 19. Volume element 13 is designated hereinafter also as sample layer 13. The sample can but must not necessarily occupy the entire volume of volume element 13.

As shown by Fig. 1, sample container 11 has a symmetry axis 15 which is perpendicular to substrate element 19 and which passes through the center 17 of substrate element 19 and through the center 16 of the upper opening of sample container 11.

As shown by Figures 1, 4 and 5, in a preferred embodiment rotation axis 29 coincides with the symmetry axis 15 of sample container 11.

As shown by Fig. 5, the tilting angle T is the angle that rotation axis 29 forms with the plane through which the central part of beam 24 extends.

As shown by Figures 1 to 5, tilting axis 28 lies in the plane through which the central part of beam 24 extends and is perpendicular to rotation axis 29. As shown in particular by Figures 2, 4 and 5 tilting axis 28 passes preferably through the center of sample layer 13.

In a preferred embodiment the tilting of substrate element 19 covers a tilting angle T comprised between a tilting angle zero defined by the initial position of substrate 19 and a predetermined value greater than zero, e.g. 10 degrees.

In a preferred embodiment the rotation and tilting movements of substrate element 19 are performed simultaneously and continuously.

In another preferred embodiment the tilting movement of substrate element 19 is performed stepwise and a rotation thereof covering a predetermined rotation angle is performed for each tilting step.

Substrate element 19 is preferably a plane wall or foil.

In a preferred embodiment the rotation axis 29 coincides with the symmetry axis 15 of sample container 11.

In another preferred embodiment the central axis of beam 24 and rotation axis 29 pass through the center 17 of plane substrate element 19 when the latter is in the above-mentioned initial position.

In a preferred embodiment the radiation source 21 and thereby beam 24 are stationary and substrate element 19 is moved with respect to beam 24.

In a preferred embodiment the rotation of substrate 19 covers an angle which is equal or close to 360 degrees.

In another embodiment the rotation of substrate 19 covers an angle which is smaller than 360 degrees.

In another embodiment the rotation of substrate 19 covers an angle which is larger than 360 degrees.

### EXEMPLE 7: FOURTH EMBODIMENT OF AN APPARATUS ACCORDING TO THE INVENTION

Fig. 10 shows a schematic perspective view of an apparatus according to the invention for performing transmission mode X-ray diffraction analysis of a plurality of samples. This apparatus comprises an X-ray radiation source 21 that provides X-ray beam 24 for irradiating a sample and a detector 22 for detecting X-ray radiation 26 transmitted through and diffracted by the sample.

The apparatus shown by Fig. 10 comprises:
an X-ray radiation source 21 which is adapted to provide a strip-shaped X-ray beam 24 the central part of which extends along a plane as shown in Figures 1, 2, 4 and 5,
a multiple-sample holder 12 which comprises a plurality of substrate elements 19 each of which is adapted for receiving and holding a sample to be analyzed. Each of said substrate elements 19 is transparent to X-ray radiation,
electromechanical-means for
   positioning a pre-selected substrate element of multiple-sample holder 12 and thereby a sample placed on that element in an initial position in which the sample lies in the path of said beam 24 and a slice 27 (shown by Fig. 3) of a volume element 13, which contains the sample, and thereby a slice of the sample itself is irradiated by beam 24, and
   effecting the following movements of the pre-selected substrate element 19 with respect to the above mentioned initial position thereof:
      - a rotation of the pre-selected substrate element 19 and thereby of the sample around a rotation axis 29 which is perpendicular to the pre-selected substrate element, said rotation covering a predetermined rotation angle, and
      - a tilting of the pre-selected substrate element 19 and thereby of the sample around a tilting axis 28 which lies in the plane through which the central part of beam 24 extends and which is perpendicular to rotation axis 29, said tilting covering a tilting angle T comprised between a tilting angle zero defined by said initial position of said substrate element 19 and a predetermined value greater than zero, and
a detector 22 for detecting X-ray radiation transmitted through and diffracted by the sample during a time interval over which the above mentioned movements of the substrate element 19 are effected.

The above mentioned electromechanical-means comprise e.g. a table for rotating and tilting multiple-sample holder 12 for effecting the above-mentioned movements.

Multiple-sample holder 12 comprises e.g. a matrix array of holes adapted for receiving respective sample containers 11 having the above described structure.

Substrate element 19 is e.g. as described above with reference to Figures 1 to 5.

Substrate element 19 is preferably a plane wall or foil.

Substrate element 19 is e.g. the plane bottom wall 19 of sample container, e.g. of a sample container 11, which has e.g. a cylindrical side wall 18 and which has an upper opening.

In a preferred embodiment the width of sample container 11 is approximately equal to the width of X-ray beam 24.

When substrate element 19 is in the above-mentioned initial position, the central axis of beam 24 and rotation axis 29 pass through the center 17 of substrate element 19.

In a preferred embodiment detector 22 is a movable detector.

In another preferred embodiment detector 22 is a stationary detector which lies in a portion of a spherical surface.

In a preferred embodiment of the above-described apparatus, the means for moving sample substrate element 19 are adapted for effecting a rotation of substrate element 19 covering an angle which is equal or close to 360 degrees.

In another embodiment the rotation of substrate element 19 covers an angle which is smaller than 360 degrees.

In another embodiment the rotation of substrate element 19 covers an angle which is larger than 360 degrees.

In a preferred embodiment shown in Fig. 10 the apparatus further comprises means for focusing X-ray beam 24, e.g. a Germanium (111) monochromator 23 located in the path of beam 24 and between X-ray source 21 and pre-selected substrate element 19 which holds the sample to be analyzed.

In a preferred embodiment the radiation source 21 and thereby beam 24 are stationary and pre-selected substrate element 19 is moved with respect to beam 24.

### MEASUREMENT RESULTS SHOWING THE IMPROVEMENT OBTAINED WITH METHOD AND APPARATUS ACCORDING TO THE INVENTION

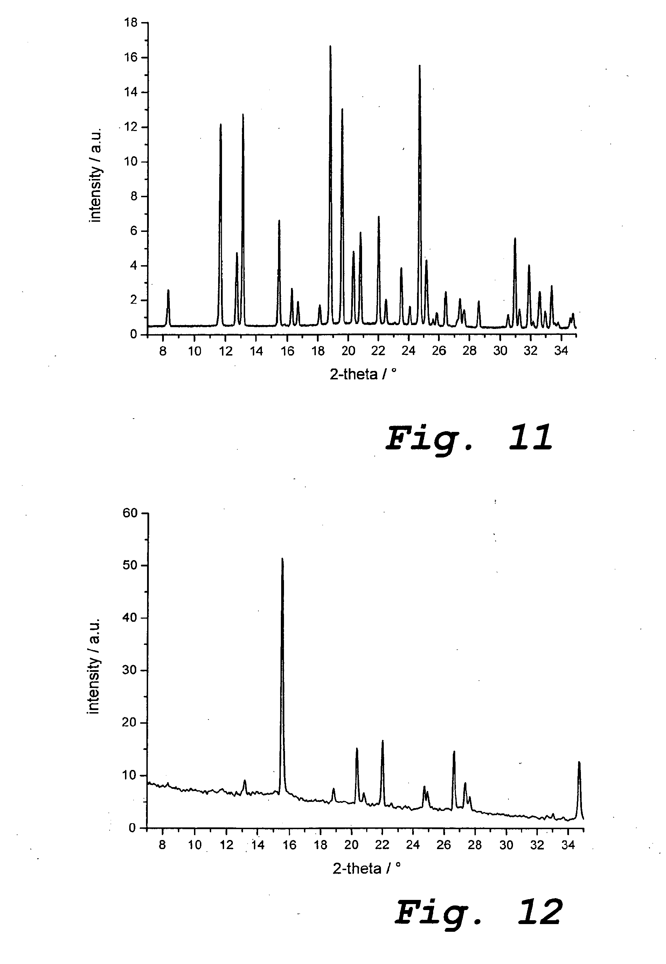

The improvement obtained with the methods and apparatuses according to the invention can be appreciated from the X-ray-diffractograms shown by Figures 11 to 15. These are diffractograms obtained for one of the same compound under different measurement conditions.

As basis for evaluating the improvement of the measuring results with the methods and apparatus according to the invention, the reference diffractogram shown by Fig. 11 was obtained by measuring a sample in powder form contained in a capillary tube. The diffractograms shown by Figures 12 to 15 were obtained for one and the same sample of the compound having the diffractogram shown by Figure 11.

Figure 11 shows an X-ray diffraction pattern which serves as reference for evaluating the quality of diffraction patterns obtained with different methods.

Fig. 12 shows an X-ray diffraction pattern obtained with a stationary sample. Compared with the diffractogram of Fig. 11, the diffractogram of Fig. 12 has much less diffracted peaks of radiation and some of these peaks have intensities which are disproportionately strong.

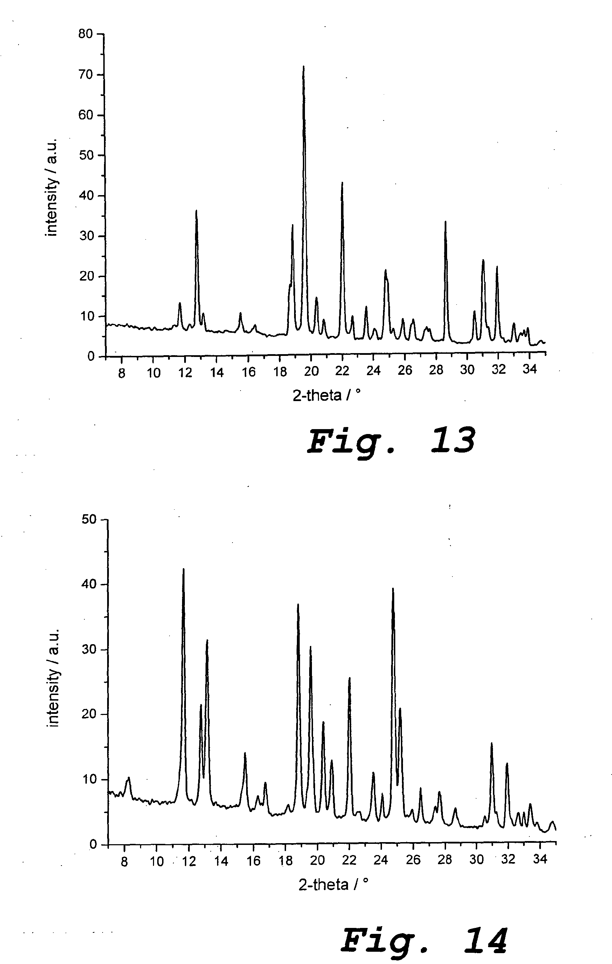

Fig. 13 shows an X-ray diffraction pattern obtained with a sample that is rotated 360 degrees during the detection of the radiation diffracted by a sample, but that is not tilted. Compared with the diffractogram of Fig. 12, the diffractogram of Fig. 13 has substantially more diffracted peaks of radiation, but not as many as the reference diffractogram of Fig. 11, and the intensity relationship of the peaks in Fig. 13 differ from the intensity relationship of the peaks in the reference diffractogram of Fig. 11.

Fig. 14 shows an X-ray diffraction pattern obtained - according to the invention - with a sample that is tilted over a certain tilting angle and rotated 360 degrees during the detection of the radiation diffracted by a sample. The diffracted peaks of radiation of this diffractogram correspond closely to those of the peaks of the reference diffractogram of Fig. 11.

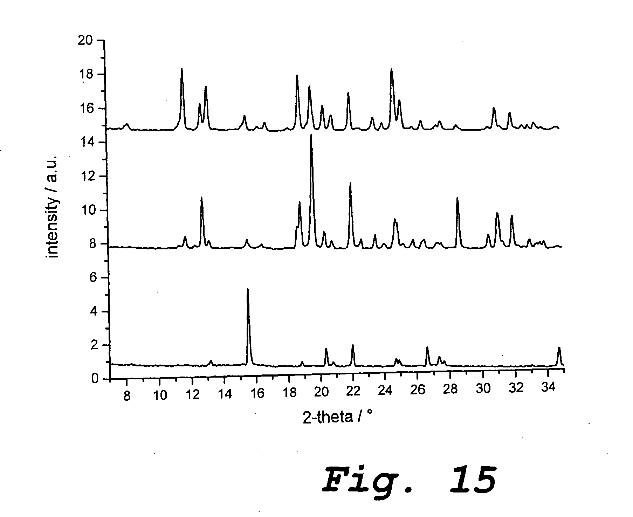

Fig. 15 shows for the purpose of comparison 3 X-ray diffraction patterns obtained under the following conditions:
the lower diffraction pattern in Fig. 15 is obtained with a stationary sample as for the obtention of the diffractogram of Fig. 12,
the diffraction pattern in the center of Fig. 15 is obtained when the sample is only rotated but not tilted during the measurement, as for the obtention of the diffractogram of Fig. 13,
the upper diffraction pattern in Fig. 15 is obtained with a sample that is rotated and tilted during the measurement, as for the obtention of the diffractogram of Fig. 14.

Although a preferred embodiments of the invention have been described using specific terms, such description is for illustrative purposes only, and it is to be understood that changes and variations may be made without departing from the spirit or scope of the following claims.

## Claims

1. A method for transmission mode X-ray diffraction analysis of a sample by means of an apparatus comprising a X-ray radiation source (21) that provides X-ray radiation for irradiating said sample and a detector (22) for detecting X-ray radiation transmitted through and diffracted by said sample, said method comprising
(a) placing a sample to be analyzed on a substrate (14) which is adapted for receiving and holding said sample, said substrate being transparent to X-ray radiation,
(b) generating by means of a X-ray radiation source (21) a strip-shaped X-ray beam (24) the central part of which extends along a plane,
(c) positioning said substrate and thereby said sample in an initial position in which said sample lies in the path of said beam (24) and a slice (27) of said sample is irradiated by said beam (24),
(d) effecting the following movements of the substrate (19) with respect to the above mentioned initial position thereof:
(d.1) a rotation of said substrate (19) and thereby of said sample around a rotation axis (29) which is perpendicular to said substrate, said rotation covering a predetermined rotation angle, and
(d.2) a tilting of said substrate (19) and thereby of said sample around a tilting axis (28) and over a tilting angle (T) defined as the angle that said rotation axis (29) forms with said plane through which the central part of said beam (24) extends, said tilting axis lying in said plane through which the central part of said beam (24) extends and being perpendicular to said rotation axis (29), said tilting covering a tilting angle (T) comprised between a first and a second predetermined value, and
(e) detecting with said detector (22) X-ray radiation transmitted through and diffracted by said sample during a time interval over which the above mentioned movements of the substrate (19) are effected.

2. A method according to claim 1, wherein said rotation and tilting movements of said substrate (19) are performed simultaneously and continuously.

3. A method according to claim 1, wherein said tilting movement of said substrate (19) is performed stepwise and a rotation thereof covering a predetermined rotation angle is performed for each tilting step.

4. A method according to any of claims 1 to 3, wherein said substrate (19) is a plane substrate.

5. A method according to any of claims 1 to 4, wherein the central axis of said beam (24) and said rotation axis (29) pass through the center (17) of said plane substrate (19) when the latter is in said initial position.

6. A method according to any of claims 1 to 5, wherein said radiation source (21) is stationary.

7. A method according to any of claims 1 to 6, wherein said rotation of substrate (19) covers an angle which is equal or close to 360 degrees.

8. A method according to any of claims 1 to 6, wherein said rotation of substrate (19) covers an angle which is smaller than 360 degrees.

9. A method according to any of claims 1 to 6, wherein said rotation of substrate (19) covers an angle which is larger than 360 degrees.

10. An apparatus for transmission mode X-ray diffraction analysis of a sample, said apparatus including a X-ray radiation source (21) that provides X-ray radiation for irradiating said sample and a detector (22) for detecting X-ray radiation transmitted through and diffracted by said sample, said apparatus comprising
(a) a X-ray radiation source (21) which is adapted to provide a strip-shaped X-ray beam (24) the central part of which extends along a plane,
(b) a substrate (19) which is adapted for receiving and holding a sample to be analyzed, said substrate being transparent to X-ray radiation,
(c) means for positioning said substrate (19) and thereby said sample in an initial position in which said sample lies in the path of said beam (24) and a slice (27) of said sample is irradiated by said beam (24),
(d) means for effecting the following movements of the substrate (19) with respect to the above mentioned initial position:
(d.1) a rotation of said substrate (19) and thereby of said sample around a rotation axis (29) which is perpendicular to said substrate, said rotation covering a predetermined rotation angle, and
(d.2) a tilting of said substrate (19) and thereby of said sample around a tilting axis (28) which lies in said plane through which the central part of said beam (24) extends and which is perpendicular to said rotation axis (29), said tilting covering a tilting angle (T) comprised between a tilting angle zero defined by said initial position of said substrate (19) and a predetermined value greater than zero, and
(e) a detector (22) for detecting X-ray radiation transmitted through and diffracted by said sample during a time interval over which the above mentioned movements of the substrate (19) are effected.

11. An apparatus according to claim 10, wherein said substrate (19) is a plane substrate.

12. An apparatus according to claim 11, wherein said plane substrate (19) is the bottom wall (19) of a sample container (11).

13. An apparatus according to claim 12, wherein the width of said sample container (11) is approximately equal to the width of said X-ray beam (24).

14. An apparatus according to any of claims 10 to 13, wherein the central axis of said beam (24) and said rotation axis (29) pass through the center (17) of said plane substrate (19) when the latter is in said initial position.

15. An apparatus according to any of claims 10 to 14, wherein said detector (22) is a movable detector.

16. An apparatus according to any of claims 10 to 14, wherein said detector (22) is a stationary detector which lies in a portion of a spherical surface.

17. An apparatus according to any of claims 10 to 16, said apparatus further comprising first focusing means located in the path of said X-ray beam (24) and between said source (21) and said sample substrate (19).

18. An apparatus according to any of claims 10 to 17, wherein said radiation source (21) is stationary.

19. An apparatus according to any of claims 10 to 18, wherein said rotation covers an angle which is equal or close to 360 degrees.

20. An apparatus according to any of claims 10 to 18, wherein said rotation covers an angle which is smaller than 360 degrees.

21. An apparatus according to any of claims 10 to 18, wherein said rotation covers an angle which is larger than 360 degrees.

22. Method for transmission mode X-ray diffraction analysis of a plurality of samples by means of an apparatus comprising a X-ray radiation source (21) and a detector (22) for detecting X-ray radiation transmitted through and diffracted by said sample, said method comprising
(a) placing a plurality of samples to be analyzed on respective substrate elements (19) of a sample holder (12),
(b) generating by means of a X-ray radiation source (21) a strip-shaped X-ray beam (24) the central part of which extends along a plane,
(c) placing said sample holder (12) in an apparatus comprising means for moving and positioning said sample holder so that a pre-selected sample can be positioned in the path of said beam (24),
(d) positioning a pre-selected substrate element (14) of said sample holder (12) and thereby the sample on that substrate element in an initial position in which said sample lies in the path of said beam (24) and a slice (27) of said sample is irradiated by said beam (24),
(d) effecting the following movements of said pre-selected substrate element (14) with respect to the above mentioned initial position:
(d.1) a rotation of said pre-selected substrate element (14) and thereby of said sample around a rotation axis (29) which is perpendicular to said substrate element, said rotation covering a predetermined rotation angle, and
(d.2) a tilting of said pre-selected substrate element (14) and thereby of said sample around a tilting axis (28) and over a tilting angle (T) defined as the angle that said rotation axis (29) forms with said plane through which the central part of said beam (24) extends, said tilting axis lying in said plane through which the central part of said beam (24) extends and being perpendicular to said rotation axis (29), said tilting covering a tilting angle (T) comprised between a first and a second predetermined value, and
(e) detecting with said detector (22) X-ray radiation transmitted through and diffracted by said sample during a time interval over which the above mentioned movements of the pre-selected substrate element (14) are effected.

23. A method according to claim 22, wherein said rotation and tilting movements of said substrate element (14) are performed simultaneously and continuously.

24. A method according to claim 22, wherein said tilting movement of said substrate element (14) is performed stepwise and a rotation thereof covering a predetermined rotation angle is performed for each tilting step.

25. A method according to any of claims 22 to 24, wherein said substrate element (14) is a plane substrate element.

26. A method according to any of claims 22 to 25, wherein the central axis of said beam (24) and said rotation axis (29) pass through the center (17) of said plane substrate element (14) when the latter is in said initial position.

27. A method according to any of claims 22 to 26, wherein said radiation source (21) is stationary.

28. A method according to any of claims 22 to 27, wherein said rotation of substrate element (14) covers an angle which is equal or close to 360 degrees.

29. A method according to any of claims 22 to 27, wherein said rotation of substrate element (14) covers an angle which is smaller than 360 degrees.

30. A method according to any of claims 22 to 27, wherein said rotation of substrate element (14) covers an angle which is larger than 360 degrees.

31. Apparatus for transmission mode X-ray diffraction analysis of a plurality of samples by means of an apparatus comprising a X-ray radiation source (21) and a detector (22) for detecting X-ray radiation transmitted through and diffracted by a sample, said apparatus comprising
(a) a X-ray radiation source (21) which is adapted to provide a strip-shaped X-ray beam (24) the central part of which extends along a plane,
(b) a sample holder (12) comprising a plurality of substrate elements (19) each of which is adapted for receiving and holding a sample to be analyzed, each of said substrate elements being transparent to X-ray radiation,
(c) means for positioning a pre-selected substrate element and thereby a sample placed on that element in an initial position in which said sample lies in the path of said beam (24) and a slice (27) of said sample is irradiated by said beam (24),
(d) means for effecting the following movements of said pre-selected substrate element (14) with respect to the above mentioned initial position thereof:
(d.1) a rotation of said pre-selected substrate element (14) and thereby of said sample around a rotation axis (29) which is perpendicular to said substrate element, said rotation covering a predetermined rotation angle, and
(d.2) a tilting of said pre-selected substrate element (14) and thereby of said sample around a tilting axis (28) which lies in said plane through which the central part of said beam (24) extends and which is perpendicular to said rotation axis (29), said tilting covering a tilting angle (T) comprised between a tilting angle zero defined by said initial position of said substrate element (14) and a predetermined value greater than zero, and
(e) a detector (22) for detecting X-ray radiation transmitted through and diffracted by said sample during a time interval over which the above mentioned movements of the substrate element (14) are effected.

32. An apparatus according to claim 31, wherein each of said substrate elements (19) is a plane substrate element.

33. An apparatus according to claim 32, wherein each of said plane substrate elements (19) is the bottom wall (19) of a sample container (11).

34. An apparatus according to claim 33, wherein the width of said sample container (11) is approximately equal to the width of said X-ray beam (24).

35. An apparatus according to any of claims 31 to 34, wherein the central axis of said beam (24) and said rotation axis pass (29) through the center (17) of said plane substrate element (14) when the latter is in said initial position.

36. An apparatus according to any of claims 31 to 35, wherein said detector (22) is a movable detector.

37. An apparatus according to any of claims 31 to 35, wherein said detector (22) is a stationary detector which lies in a portion of a spherical surface.

38. An apparatus according to any of claims 31 to 37, said apparatus further comprising first focusing means located in the path of said X-ray beam (24) and between said source (21) and one of said sample substrate elements (19).

39. An apparatus according to any of claims 31 to 38, wherein said radiation source (21) is stationary.

40. An apparatus according to any of claims 31 to 39, wherein said rotation covers an angle which is equal or close to 360 degrees.

41. An apparatus according to any of claims 31 to 39, wherein said rotation covers an angle which is smaller than 360 degrees.

42. An apparatus according to any of claims 31 to 39, wherein said rotation covers an angle which is larger than 360 degrees.
